(19) **Europäisches Patentamt European Patent Office Office européen des brevets**

(11) **EP 4 379 576 B1**

(12) **FASCICULE DE BREVET EUROPEEN**

(45) Date de publication et mention de la délivrance du brevet:
**06.08.2025 Bulletin 2025/32**

(21) Numéro de dépôt: **23212208.5**

(22) Date de dépôt: **27.11.2023**

(51) Classification Internationale des Brevets (IPC):
**G06F 17/18** (2006.01)   **B64F 5/60** (2017.01)

(52) Classification Coopérative des Brevets (CPC):
**G06F 17/18; B64F 5/60**

(54) **PROCÉDÉ DE DÉTERMINATION D'UNE PROBABILITÉ D APPARITION D'UN DYSFONCTIONNEMENT CRÉANT UN DÉFAUT DE PERFORMANCE DANS UN AÉRONEF**

**VERFAHREN ZUR BESTIMMUNG EINER WAHRSCHEINLICHKEIT, DIE EINE FEHLFUNKTION IN EINEM FLUGZEUG EINHERGEHEN**

**METHOD FOR DETERMINING A PROBABILITY OF OCCURRENCE OF A MALFUNCTION CREATING A PERFORMANCE FAULT IN AN AIRCRAFT**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.11.2022 FR 2212516**

(43) Date de publication de la demande:
**05.06.2024 Bulletin 2024/23**

(73) Titulaires:
 • **Airbus SAS**
   **31700 Blagnac (FR)**
 • **Airbus Operations GmbH**
   **21129 Hamburg (DE)**

(72) Inventeurs:
 • **DAUTELLE, Jean-Marie**
   **31700 BLAGNAC Cedex (FR)**
 • **WALLINGER, Sara**
   **21129 HAMBURG (DE)**

(74) Mandataire: **Cabinet Le Guen Maillet**
   **3, impasse de la Vigie**
   **CS 71840**
   **35418 Saint-Malo Cedex (FR)**

(56) Documents cités:
**EP-A1- 3 486 739     WO-A2-2014/064396
US-B1- 10 964 130**

**Description**

DOMAINE TECHNIQUE

L'invention concerne le domaine de la maintenance préventive d'aéronefs, et concerne plus particulièrement la prévision d'apparition d'un dysfonctionnement créant un défaut de performance dans un aéronef pour opérer une action de maintenance en conséquence.

ETAT DE LA TECHNIQUE ANTÉRIEURE

D'une manière connue, les systèmes apprenants, dits systèmes d'intelligence artificielle, sont entraînés avec des bases de données. Les bases de données qui servent à l'apprentissage des systèmes apprenants sont constituées avec minutie. En effet, il est nécessaire que la base de données contienne suffisamment de cas sur le sujet sur lequel le système apprenant est entraîné. Plus le nombre de cas à étudier est important, plus le système apprenant peut établir des corrélations pertinentes entre les éléments présents dans la base de données.

Mais l'utilisation d'un système apprenant trouve une limite avec les phénomènes rares. En effet, si la base de données d'apprentissage contient un nombre trop faible de cas à étudier, alors le système apprenant ne peut pas établir de corrélations fiables. C'est le cas par exemple des dysfonctionnements réduisant les performances d'un aéronef. Le très faible nombre de ces dysfonctionnements peut actuellement être un frein à une constitution de base de données suffisamment riche pour permettre à un système apprenant d'analyser les dysfonctionnements pour établir des probabilités précises de survenue d'un dysfonctionnement en fonction d'événements passés. En effet, face à un trop faible nombre de données, le système apprenant peut-être limité dans sa capacité à déterminer quels événements antérieurs ont un impact dans la survenue d'un dysfonctionnement.

Pour pallier un faible nombre de cas dans une base de données d'un système apprenant, deux techniques sont principalement utilisées.

Une première technique consiste à réduire la taille de la base de données pour avoir 50% d'incidents effectifs sur l'ensemble de la base de données. Le problème de cette technique est que lorsque le nombre de cas est vraiment faible, cela implique de réduire drastiquement la taille de la base de données à une taille qui ne permet plus d'entrainer un système apprenant.

Une deuxième technique consiste à cloner artificiellement les cas à étudier pour en augmenter le nombre. Le problème de cette technique est qu'elle fausse les statistiques de survenue d'un cas à étudier.

Le document US 10 964 130 divulgue la détermination du moment où la maintenance des composants de véhicules complexes, par exemple des avions, est nécessaire.

Dans ce contexte, il est donc nécessaire de fournir un procédé de détermination d'une probabilité d'apparition d'un dysfonctionnement créant un défaut de performance dans un aéronef pour opérer une action de maintenance en conséquence, qui permette d'utiliser un faible nombre de données d'apprentissage pour fournir une détermination statistique fiable.

EXPOSÉ DE L'INVENTION

A cet effet, selon un premier aspect, il est proposé un procédé de détermination d'une probabilité d'apparition d'un dysfonctionnement créant un défaut de performance dans un aéronef pour opérer une action de maintenance en conséquence. Le procédé est exécuté par un système informatique comprenant de la circuiterie électronique qui implémente les étapes suivantes :

- acquérir un ensemble de données d'entrées portant chacune sur l'apparition dudit dysfonctionnement dans un aéronef, chaque donnée d'entrée comprenant une notification horodatée du dysfonctionnement et un relevé horodaté de mesures de capteurs de l'aéronef ;

- regrouper les données d'entrées en groupes de dysfonctionnements ayant une même cause racine ;

- délimiter une fenêtre temporelle causale pour le dysfonctionnement, une borne supérieure de la fenêtre temporelle causale étant la notification horodatée du dysfonctionnement et, pour chaque donnée d'entrée, conserver uniquement un échantillon contenant les mesures comprises dans la fenêtre temporelle causale ;

- pondérer chaque mesure d'un même échantillon, la somme des pondérations d'un même échantillon étant égale à 1 ;

- filtrer les mesures de chaque échantillon pour ne conserver que des mesures d'intérêt vis-à-vis du dysfonctionnement ;

- comparer les mesures d'intérêt de chaque échantillon avec des mesures de référence, et pour chaque mesure d'intérêt d'un échantillon qui est supérieure à la mesure de référence correspondante, attribuer une première valeur booléenne à ladite mesure d'intérêt, et pour chaque mesure d'intérêt d'un échantillon qui est inférieure à la mesure de référence correspondante, attribuer une seconde valeur booléenne à ladite mesure d'intérêt différente de la première valeur booléenne, pour obtenir une série de valeurs booléennes ;

- fractionner chaque groupe en plusieurs sous-groupes, chaque sous-groupe correspondant à une variation d'une ou plusieurs valeurs booléennes de la série de valeurs booléennes, de sorte que pour chaque groupe il y a $2^n$ sous-groupes avec n le nombre de valeurs booléennes, et répartir chaque échantillon d'un même groupe dans un sous-groupe correspondant aux valeurs booléennes de chaque échantillon ;

- calculer la somme des pondérations des mesures de chaque sous-groupe ;

- utiliser la somme des pondérations de chaque sous-groupe pour déterminer une probabilité d'apparition du dysfonctionnement pour chaque sous-groupe ;

- opérer une action de maintenance d'un aéronef selon la probabilité d'apparition du dysfonctionnement déterminée.

Ainsi, le procédé proposé permet de traiter un ensemble de données d'entrées pour ne conserver que les mesures pertinentes au regard de la détermination d'une probabilité d'apparition d'un dysfonctionnement. En d'autres termes, le procédé selon l'invention permet d'affiner un ensemble de données d'entrées pour établir des liens de causalité pertinents entre des événements antérieurs (des mesures) et un dysfonctionnement, de sorte à déterminer une probabilité d'apparition d'un incident en fonction de la survenue d'un ou plusieurs événements antérieurs, et permettre d'opérer une action de maintenance en conséquence.

Selon une disposition particulière, la pondération de chaque mesure est calculée selon $W = 1/N$, avec : W la pondération et N le nombre de mesures dans l'échantillon.

Selon une disposition particulière, la pondération de chaque mesure est corrigée selon

$$Wc = \frac{CW(-t) \times W}{NF},$$ avec Wc la pondération corrigée, CW la fenêtre temporelle causale et NF un facteur de normalisation.

Selon une même disposition, le facteur de normalisation NF est calculé selon : $NF = \sum CW(-t) \times W$.

Selon une disposition particulière, un système apprenant utilise la somme des pondérations de chaque sous-groupe pour déterminer une probabilité d'apparition du dysfonctionnement pour chaque sous-groupe.

Selon un autre aspect, il est proposé un produit programme d'ordinateur comprenant des instructions de code de programme pour exécuter le procédé proposé, lorsque lesdites instructions sont exécutées par un processeur.

Selon un autre aspect, il est proposé un support de stockage non transitoire sur lequel est stocké un programme d'ordinateur comprenant des instructions de code de programme pour exécuter le procédé proposé, lorsque lesdites instructions sont lues depuis ledit support de stockage non transitoire et exécutées par un processeur.

Selon un autre aspect, il est proposé un système informatique comprenant de la circuiterie électronique configurée pour implémenter une détermination d'une probabilité d'apparition d'un dysfonctionnement créant un défaut de performance dans un aéronef, la circuiterie électronique implémentant au moins les étapes suivantes :

- acquérir un ensemble de données d'entrées portant chacune sur l'apparition dudit dysfonctionnement dans un aéronef, chaque donnée d'entrée comprenant une notification horodatée du dysfonctionnement et un relevé horodaté de mesures de capteurs de l'aéronef ;
- regrouper les données d'entrées en groupes de dysfonctionnements ayant une même cause racine ;
- délimiter une fenêtre temporelle causale pour le dysfonctionnement, une borne supérieure de la fenêtre temporelle causale étant la notification horodatée du dysfonctionnement et pour chaque donnée d'entrée, conserver uniquement un échantillon contenant les mesures comprises dans la fenêtre temporelle causale ;
- pondérer chaque mesure d'un même échantillon , la somme des pondérations d'un même échantillon étant égale à 1 ;
- filtrer les mesures de chaque échantillon pour ne conserver que des mesures d'intérêt vis-à-vis du dysfonctionnement ;
- comparer les mesures d'intérêt de chaque échantillon avec des mesures de référence, et pour chaque mesure d'intérêt d'un échantillon qui est supérieure à la mesure de référence correspondante, attribuer une première valeur booléenne à ladite mesure d'intérêt, et pour chaque mesure d'intérêt d'un échantillon qui est inférieure à la mesure de référence correspondante, attribuer une seconde valeur booléenne à ladite mesure d'intérêt différente de la première valeur booléenne pour obtenir une série de valeurs booléennes ;
- fractionner chaque groupe en plusieurs sous-groupes, chaque sous-groupe correspondant à une variation d'une ou plusieurs valeurs booléennes de la série de valeurs booléennes, de sorte que pour chaque groupe il y a $2^n$ sous-groupes avec n le nombre de valeurs booléennes, et répartir chaque échantillon d'un même groupe dans un sous-groupe correspondant aux valeurs booléennes de chaque échantillon ;
- calculer la somme des pondérations des mesures de chaque sous-groupe ;
- utiliser la somme des pondérations de chaque sous-groupe pour déterminer une probabilité d'apparition du dysfonctionnement pour chaque sous-groupe.

BRÈVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement le traitement d'un procédé de détermination d'une probabilité d'apparition d'un dysfonctionnement créant un défaut de performance dans un aéronef ;
[Fig. 2] illustre schématiquement un agencement matériel d'un système informatique qui comprend de la circuiterie électronique pour implémenter un procédé de détermination d'une probabilité d'apparition d'un dysfonctionnement créant un défaut de performance dans un aéronef.

EXPOSE DETAILLE DE MODES DE RÉALISATION

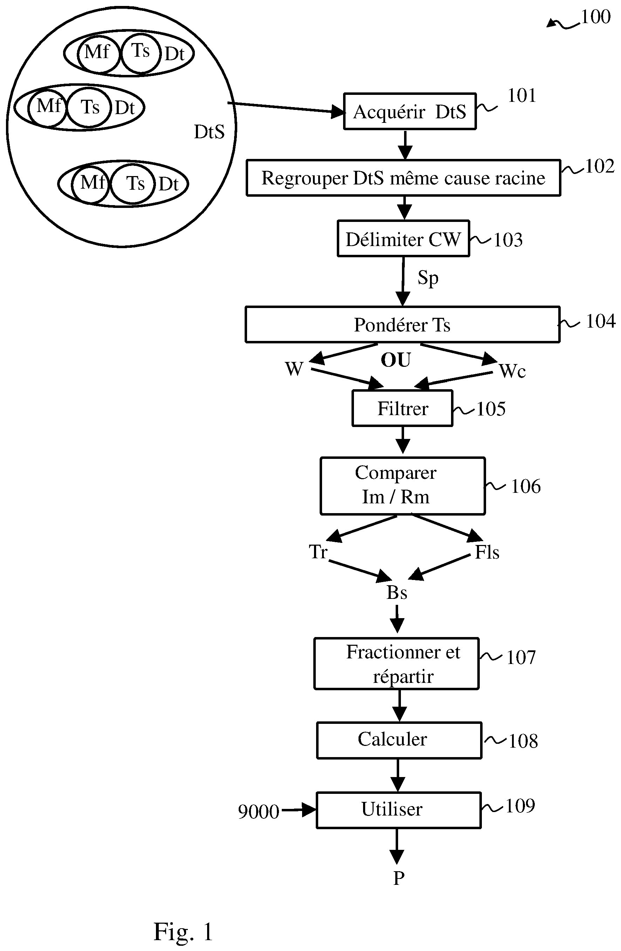

*Procédé de détermination d'une probabilité d'apparition d'un dysfonctionnement créant un défaut de performance dans un aéronef.*
En référence à la Fig. 1, selon un premier aspect, il est proposé un procédé 100 de détermination d'une probabilité P d'apparition d'un dysfonctionnement Mf créant un défaut de performance dans un aéronef. Tel que cela sera décrit ci-après, le procédé 100 est mis en œuvre par un système informatique 200 comprenant de la circuiterie électronique. Le système informatique 200 est adapté pour implémenter les étapes du procédé 100.
Le procédé 100 comprend une pluralité d'étapes qui seront détaillées ci-après.
Une première étape 101 du procédé consiste à acquérir un ensemble DtS de données d'entrées Dt portant chacune sur l'apparition dudit dysfonctionnement Mf dans un aéronef, chaque donnée d'entrée Dt comprenant une notification horodatée du dysfonctionnement Mf et un relevé horodaté de mesures Ts de capteurs de l'aéronef. Le relevé horodaté de mesures Ts peut être un relevé issu des enregistreurs de vol (boites noires) d'un aéronef. Le relevé horodaté de mesures Ts peut donc comprendre un grand nombre de mesures pouvant remonter à la mise en service de l'aéronef. Par grand nombre de mesures, il est entendu que le relevé horodaté de mesures peut contenir des mesures d'une grande diversité de capteurs de l'aéronef. Selon un mode de réalisation, le relevé horodaté de mesures contient des mesures de tout l'ensemble de capteurs de l'aéronef.
Ensuite, le procédé comprend une étape 102 consistant à regrouper les données d'entrées Dt en groupes de dysfonctionnements Mf ayant une même cause racine.
Selon une disposition particulièrement avantageuse, cette étape 102 comprend une identification de paternes d'événements antérieurs, de mesures, conduisant à un dysfonctionnement Mf.

Par exemple, si le dysfonctionnement Mf étudié est une corrosion d'une pièce, un événement antérieur conduisant à ce dysfonctionnement peut être un stationnement de l'aéronef dans un aéroport en bord de mer. Il est précisé qu'une donnée concernant le stationnement de l'aéronef peut être obtenue à partir des mesures d'un système de localisation (type GPS, Global Positioning System en anglais) de l'aéronef. En effet, un système de localisation peut transmettre des mesures horodatées d'une position. Si un aéronef demeure plusieurs heures ou jours sur la même position, qui est par ailleurs identifiée comme un aéroport, alors il est stationné dans cet aéroport.
Le regroupement par causes racines permet de séparer des dysfonctionnements Mf ayant des causes différentes.
Une étape suivante 103 du procédé consiste à délimiter une fenêtre temporelle causale CW pour le dysfonctionnement Mf, une borne supérieure de la fenêtre temporelle causale CW étant la notification horodatée du dysfonctionnement Mf, et pour chaque donnée d'entrée Dt, à conserver uniquement un échantillon Sp contenant les mesures Ts comprises dans la fenêtre temporelle causale CW. Plus précisément, en fonction du dysfonctionnement Mf étudié, la fenêtre temporelle causale CW peut être plus ou moins longue. En effet, il est déterminé que pour certains dysfonctionnements Mf seules les mesures Ts effectuées quelques minutes ou quelques heures avant la survenue du dysfonctionnement Mf ont un impact. A contrario, d'autres dysfonctionnements Mf se placent sur une durée plus importante et la fenêtre temporelle causale CW doit être de plusieurs mois ou plusieurs années. D'une manière particulièrement avantageuse, la détermination de la fenêtre temporelle causale CW permet d'affiner les données d'entrées Dt pour conserver uniquement un échantillon Sp contenant les mesures Ts comprises dans la fenêtre temporelle causale CW. En d'autres termes, cette disposition permet de diminuer le volume des données d'entrées Dt en supprimant des données dont il est certain qu'elles ne sont pas pertinentes pour déterminer la probabilité P d'apparition du disfonctionnement Mf.
Selon un mode de réalisation, la fenêtre temporelle causale CW est dite rectangulaire. Il s'agit alors d'une fenêtre temporelle causale CW couvrant l'intégralité d'une période temporelle entre deux bornes délimitant la fenêtre temporelle causale CW.
Selon un autre mode de réalisation, la fenêtre temporelle causale CW peut présenter une autre structure. Par exemple, selon un mode de réalisation, il peut être estimé que la position dans le temps des mesures Ts fait varier leur importance quant à la probabilité P d'apparition du disfonctionnement. Selon ce mode de réalisation, les mesures Ts peuvent être pondérées, lors de l'étape 103, en fonction de leur position dans la fenêtre temporelle causale CW.
Ensuite, le procédé comprend une étape 104 consistant à pondérer chaque mesure Ts d'un même échantillon Sp. La pondération est effectuée de sorte que la somme des pondérations d'un même échantillon Sp est égale à 1.

En d'autres termes, les étapes précédentes ont permis de trier et regrouper les mesures Ts pour avoir des échantillons Sp dans lesquels les dysfonctionnements Mf ont les mêmes causes racines et dans lesquels les mesures Ts ont potentiellement chacune un impact sur la survenue du dysfonctionnement Mf. Chaque échantillon contient des mesures Ts relatives à des dysfonctionnements Mf. Il est donc établi que, dans chaque échantillon, la probabilité d'avoir un dysfonctionnement est de 1.

Selon un mode de réalisation, la pondération de chaque mesure Ts est calculée selon $W = 1/N$, avec : W la pondération et N le nombre de mesures Ts dans l'échantillon Sp.

En d'autres termes, la pondération de chaque mesure de l'échantillon correspond à 1 (la probabilité de présence d'un dysfonctionnement dans l'échantillon) divisé par le nombre total de mesures dans l'échantillon. Ce mode de pondération est particulièrement adapté lorsque la fenêtre temporelle causale CW déterminée précédemment est dite rectangulaire.

Selon un autre mode de réalisation, la pondération de chaque mesure Ts est corrigée selon

$$Wc = \frac{CW(-t) \times W}{NF}$$

, avec Wc la pondération corrigée, CW la fenêtre temporelle causale et NF un facteur de normalisation.

D'une manière préférentielle, selon cette disposition, le facteur de normalisation NF est calculé selon : $NF = \sum CW(-t) \times W$.

Une fois que les mesures Ts de chaque échantillon Sp ont été pondérées, le procédé 100 comprend une étape 105 consistant à filtrer les mesures de chaque échantillon Sp pour ne conserver que des mesures d'intérêt Im vis-à-vis du dysfonctionnement Mf.

Par exemple, pour un dysfonctionnement Mf donné, il peut être établi que les mesures d'intérêts Im sont : la vitesse, la pression et la température extérieure. Pour un autre dysfonctionnement Mf, les mesures d'intérêts Im peuvent être déterminées comme étant un lieu de stationnement, une durée de stationnement et l'humidité de l'air. Ainsi, les mesures d'intérêts Im sont établies en fonction du dysfonctionnement Mf étudié. Il est précisé que dans une démarche prospective, les mesures d'intérêts Im peuvent être modifiées pour rechercher les mesures d'intérêt Im les plus adaptées à chaque dysfonctionnement étudié.

Ensuite, le procédé 100 comprend une étape 106 de comparaison des mesures d'intérêt Im de chaque échantillon Sp avec des mesures de référence Rm, et pour chaque mesure d'intérêt Im d'un échantillon qui est supérieure à la mesure de référence correspondante Rm, attribuer une première valeur booléenne Tr à ladite mesure d'intérêt Im, et pour chaque mesure d'intérêt Im d'un échantillon qui est inférieure à la mesure de référence correspondante Rm, attribuer une seconde valeur booléenne Fls à ladite mesure d'intérêt différente de la première valeur booléenne Tr, pour obtenir une série de valeurs booléennes Bs.

En d'autres termes, dans l'étape 106, des mesures de référence Rm sont établies. Ces mesures de référence Rm correspondent à une valeur dite de référence pour une mesure d'intérêt Im correspondante. La mesure de référence Rm peut être établie par des abaques ou peut être calculée en utilisant notamment les mesures d'intérêt Im. Ainsi, une mesure de référence Rm peut, par exemple, être déterminée comme une moyenne de l'ensemble des mesures d'intérêt correspondantes Im. Chaque mesure d'intérêt Im est comparée à la mesure de référence correspondante Rm. Si la mesure d'intérêt Im est supérieure à la mesure de référence Rm correspondante, alors une première valeur booléenne Tr lui est attribuée. Si la mesure d'intérêt Im est inférieure à la mesure de référence Rm correspondante, alors une deuxième valeur booléenne Fls lui est attribuée. La première valeur booléenne Tr et la deuxième valeur booléenne Fls sont différentes. Typiquement, la première valeur booléenne Tr peut, par exemple, être 1 et la deuxième valeur booléenne Fls peut, par exemple, être 0.

Le procédé 100 comprend ensuite une étape 107 de fractionnement de chaque groupe en plusieurs sous-groupes. Chaque sous-groupe correspond à une variation d'une ou plusieurs valeurs booléennes de la série de valeurs booléennes Bs, de sorte que pour chaque groupe il y a $2^n$ sous-groupes avec n le nombre de valeurs booléennes. En d'autres termes, à l'étape 106 précédente, une valeur booléenne a été attribuée à chaque mesure d'intérêt Im. Ainsi, chaque échantillon Sp comprend une série de valeurs booléennes Bs. La répartition en sous-groupes permet de réunir des échantillons ayant la même série booléenne Bs. Cette étape 107 permet donc de trier et regrouper les échantillons Sp en fonction de leur série de valeurs booléennes Bs.

Une fois que les échantillons sont répartis en sous-groupes, le procédé comprend une étape 108 consistant à calculer la pondération de chaque sous-groupe. Il est précisé que la pondération de chaque sous-groupe est calculée en additionnant la pondération déterminée à l'étape de 104 de chaque mesure d'intérêt Im de chaque échantillon Sp. En effet, il est rappelé qu'à l'étape 104, l'ensemble des mesures Ts de chaque échantillon Sp ont été pondérées. Ensuite, à l'étape 105, seules les mesures d'intérêts Im ont été conservées. Les mesures d'intérêts Im sont choisies parmi les mesures Ts et sont donc pondérées.

Après avoir calculé la pondération de chaque sous-groupe, dans une étape 109, le procédé 100 utilise la somme des pondérations de chaque sous-groupe pour déterminer une probabilité P d'apparition du dysfonctionnement Mf.

D'une manière particulièrement avantageuse, le procédé 100 comprend d'opérer une action de maintenance d'un aéronef selon la probabilité P d'apparition du dysfonctionnement déterminée.

Selon une disposition particulièrement avantageuse, un système apprenant 9000 est utilisé pour calculer une probabilité d'apparition P d'un dysfonctionnement Mf créant un défaut de performance dans un aéronef. En effet, l'ensemble des étapes précédentes permet d'obtenir des données pertinentes pour former une base d'apprentissage pour le système apprenant 9000. En d'autres termes, le travail sur les données d'entrées Dt pour - à partir d'un grand nombre de données - ne sélectionner et ne conserver que les mesures d'intérêt Im, puis transformer ces données en valeurs booléennes pondérées, permet de former une base d'apprentissage performante pour le système apprenant 9000.

Selon une disposition particulière, le système apprenant 9000 peut faire partie du système informatique 200.

Selon une autre disposition particulière, le système apprenant 9000 est indépendant du système informatique 200.

Selon une disposition particulière, après l'entraînement du système apprenant 9000, celui-ci peut être intégré dans un aéronef pour réaliser des signalements de probabilité d'apparition d'un dysfonctionnement, en fonction de la survenue d'un événement, de l'acquisition d'une mesure (une mesure étant de fait liée à un événement). D'une manière avantageuse, l'intégration dans un aéronef peut permettre un suivi en temps réel en fonction de la survenue des événements, ce qui peut permettre une maintenance préventive la plus adaptée à l'aéronef.

Selon une autre disposition, après l'entrainement du système apprenant 9000, celui-ci peut être utilisé par un opérateur d'une flotte d'aéronefs. Le système apprenant peut-être alimenté avec des relevés de mesures Ts de l'ensemble des aéronefs d'une flotte de l'opérateur, pour anticiper les opérations de maintenance d'un ou plusieurs aéronefs de la flotte.

*Système informatique*

Selon un autre aspect, il est proposé un système informatique 200 comprenant de la circuiterie électronique configurée pour implémenter une détermination d'une probabilité d'apparition d'un dysfonctionnement créant un défaut de performance dans un aéronef, comme décrit ci-dessus.

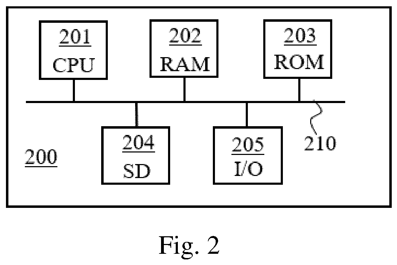

Tel que schématisé sur la Fig. 2, le système informatique 200 peut comporter, reliés par un bus de communication 210 : un processeur 201 ; une mémoire vive 202 ; une mémoire morte 203, par exemple de type ROM (« Read Only Memory » en langue anglo-saxonne) ou EEPROM (« Electrically-Erasable Programmable Read Only Memory » en langue anglo-saxonne) et un gestionnaire d'interfaces d'entrées-sorties 205.

Le processeur 201 est capable d'exécuter des instructions chargées dans la mémoire vive 202 à partir de la mémoire morte 203, d'une mémoire externe, d'un support de stockage (tel qu'une carte SD), ou d'un réseau de communication. Lorsque le système informatique 200 est mis sous tension, le processeur 201 est capable de lire de la mémoire vive 202 des instructions et de les exécuter. Ces instructions forment un programme d'ordinateur permettant l'implémentation, par le processeur 201, des procédés et étapes décrits ici.

Tout ou partie des procédés et étapes décrits ci-avant peut ainsi être implémenté sous forme logicielle par exécution d'un ensemble d'instructions par une machine programmable, par exemple un processeur de type DSP (« Digital Signal Processor » en langue anglo-saxonne) ou un microcontrôleur, ou être implémenté sous forme matérielle par une machine ou un composant dédié, par exemple un composant FPGA (« Field Programmable Gate Array » en langue anglo-saxonne ou ASIC (« Application-Specific Integrated Circuit » en langue anglo-saxonne). D'une manière générale, le système informatique 200 comporte de la circuiterie électronique adaptée et configurée pour implémenter, sous forme logicielle et/ou matérielle, les procédés et étapes décrits ci-avant.

## Revendications

1. Procédé (100) de détermination d'une probabilité d'apparition d'un dysfonctionnement (Mf) créant un défaut de performance dans un aéronef pour opérer une action de maintenance en <u>conséquence</u>, le procédé étant **caractérisé en ce qu'**il est exécuté par un système informatique (200) comprenant de la circuiterie électronique qui implémente les étapes suivantes :

    - acquérir (101) un ensemble (DtS) de données d'entrées (Dt) portant chacune sur l'apparition dudit dysfonctionnement (Mf) dans un aéronef, chaque donnée d'entrée (Dt) comprenant une notification horodatée du dysfonctionnement (Mf) et un relevé horodaté de mesures (Ts) de capteurs de l'aéronef ;
    - regrouper (102) les données d'entrées (Dt) en groupes de dysfonctionnements (Mf) ayant une même cause racine ;
    - délimiter (103) une fenêtre temporelle causale (CW) pour le dysfonctionnement (Mf), une borne supérieure de la fenêtre temporelle causale (CW) étant la notification horodatée du dysfonctionnement (Mf), et pour chaque donnée d'entrée (Dt), conserver uniquement un échantillon (Sp) contenant les mesures (Ts) comprises dans la fenêtre temporelle causale (CW) ;
    - pondérer (104) chaque mesure (Ts) d'un même échantillon (Sp), la somme des pondérations d'un même échantillon (Sp) étant égale à 1 ;
    - filtrer (105) les mesures de chaque échantillon pour ne conserver que des mesures d'intérêt vis-à-vis du dysfonctionnement ;

- comparer (106) les mesures d'intérêt (Im) de chaque échantillon (Sp) avec des mesures de référence (Rm), et pour chaque mesure d'intérêt (Im) d'un échantillon qui est supérieure à la mesure de référence correspondante (Rm), attribuer une première valeur booléenne (Tr) à ladite mesure d'intérêt (Im), et pour chaque mesure d'intérêt (Im) d'un échantillon qui est inférieure à la mesure de référence correspondante (Rm), attribuer une seconde valeur booléenne (Fls) à ladite mesure d'intérêt différente de la première valeur booléenne (Tr) pour obtenir une série de valeurs booléennes (Bs) ;

- fractionner (107) chaque groupe en plusieurs sous-groupes, chaque sous-groupe correspondant à une variation d'une ou plusieurs valeurs booléennes de la série de valeurs booléenne (Bs), de sorte que pour chaque groupe il y a $2^n$ sous-groupes avec n le nombre de valeurs booléennes, et répartir chaque échantillon d'un même groupe dans un sous-groupe correspondant aux valeurs booléennes de chaque échantillon ;

- calculer (108) la somme des pondérations des mesures de chaque sous-groupe ;

- utiliser (109) la somme des pondérations de chaque sous-groupe pour déterminer une probabilité d'apparition du dysfonctionnement pour chaque sous-groupe

- opérer une action de maintenance d'un aéronef selon la probabilité d'apparition du dysfonctionnement déterminée.

2. Procédé selon la revendication 1, dans lequel la pondération (104) de chaque mesure (Ts) est calculée selon $W = 1/N$, avec : W la pondération et N le nombre de mesures (Ts) dans l'échantillon (Sp).

3. Procédé selon la revendication 1, dans lequel la pondération (104) de chaque mesure (Ts) est corrigée selon $Wc = \frac{CW(-t) \times W}{NF}$, avec Wc la pondération corrigée, CW la fenêtre temporelle causale et NF un facteur de normalisation.

4. Procédé selon la revendication 3, dans lequel le facteur de normalisation NF est calculé selon : $NF = \sum CW(-t) \times W$.

5. Procédé selon l'une des revendications 1 à 4, dans lequel un système apprenant (9000) utilise (109) la somme des pondérations de chaque sous-groupe pour déterminer une probabilité d'apparition du dysfonctionnement pour chaque sous-groupe.

6. Produit programme d'ordinateur comprenant des instructions de code de programme pour exécuter le procédé (100) selon l'une quelconque des revendications 1 à 5, lorsque lesdites instructions sont exécutées par un processeur.

7. Support de stockage non transitoire sur lequel est stocké un programme d'ordinateur comprenant des instructions de code de programme pour exécuter le procédé (100) selon l'une quelconque des revendications 1 à 5, lorsque lesdites instructions sont lues depuis ledit support de stockage non transitoire et exécutées par un processeur.

8. Système informatique (200) comprenant de la circuiterie électronique configurée pour implémenter une détermination d'une probabilité d'apparition d'un dysfonctionnement créant un défaut de performance dans un aéronef, la circuiterie électronique implémentant au moins les étapes suivantes :

- acquérir (101) un ensemble (DtS) de données d'entrées (Dt) portant chacune sur l'apparition dudit dysfonctionnement (Mf) dans un aéronef, chaque donnée d'entrée (Dt) comprenant une notification horodatée du dysfonctionnement (Mf) et un relevé horodaté de mesures (Ts) de capteurs de l'aéronef ;

- regrouper (102) les données d'entrées (Dt) en groupes de dysfonctionnements (Mf) ayant une même cause racine ;

- délimiter (103) une fenêtre temporelle causale (CW) pour le dysfonctionnement (Mf), une borne supérieure de la fenêtre temporelle causale (CW) étant la notification horodatée du dysfonctionnement (Mf), et pour chaque donnée d'entrée (Dt), conserver uniquement un échantillon (Sp) contenant les mesures (Ts) comprises dans la fenêtre temporelle causale (CW) ;

- pondérer (104) chaque mesure (Ts) d'un même échantillon (Sp), la somme des pondérations d'un même échantillon (Sp) étant égale à 1 ;

- filtrer (105) les mesures de chaque échantillon pour ne conserver que des mesures d'intérêt vis-à-vis du dysfonctionnement ;

- comparer (106) les mesures d'intérêt (Im) de chaque échantillon (Sp) avec des mesures de référence (Rm), et pour chaque mesure d'intérêt (Im) d'un échantillon qui est supérieure à la mesure de référence correspondante (Rm), attribuer une première valeur booléenne (Tr) à ladite mesure d'intérêt (Im), et pour chaque mesure d'intérêt (Im) d'un échantillon qui est inférieure à la mesure de référence correspondante (Rm), attribuer une seconde valeur booléenne (Fls) à ladite mesure d'intérêt différente de la première valeur booléenne (Tr) pour obtenir une série de valeurs booléennes (Bs) ;

- fractionner (107) chaque groupe en plusieurs sous-groupes, chaque sous-groupe correspondant à une variation d'une ou plusieurs valeurs booléennes de la série de valeurs booléenne (Bs), de sorte que pour chaque groupe il y a $2^n$ sous-groupes avec n le nombre de valeurs booléennes, et répartir chaque échantillon d'un même groupe dans un sous-groupe correspondant aux valeurs booléennes de chaque échantillon ;

- calculer (108) la somme des pondérations des mesures de chaque sous-groupe ;

- utiliser (109) la somme des pondérations de chaque sous-groupe pour déterminer une probabilité d'apparition du dysfonctionnement pour chaque sous-groupe.

## Patentansprüche

1. Verfahren (100) zur Bestimmung einer Eintrittswahrscheinlichkeit einer Fehlfunktion (Mf), die zu einer Leistungseinbuße in einem Flugzeug führt, um infolgedessen eine Wartungsmaßnahme durchzuführen, wobei das Verfahren **dadurch gekennzeichnet ist, dass** es von einem Informationssystem (200) ausgeführt wird, das eine elektronische Schaltungsanordnung umfasst, die die folgenden Schritte implementiert:

   - Erfassen (101) eines Satzes (DtS) von Eingangsdaten (Dt), die sich jeweils auf ein Eintreten der Fehlfunktion (Mf) in einem Flugzeug beziehen, wobei jedes Eingangsdatenelement (Dt) eine zeitgestempelte Benachrichtigung der Fehlfunktion (Mf) und eine zeitgestempelte Aufstellung von Messungen (Ts) von Sensoren des Flugzeugs umfasst;
   - Gruppieren (102) der Eingangsdaten (Dt) zu Fehlfunktionsgruppen (Mf), die eine selbe Grundursache haben;
   - Begrenzen (103) eines kausalen Zeitfensters (CW) für die Fehlfunktion (Mf), wobei ein oberer Grenzwert des kausalen Zeitfensters (CW) die zeitgestempelte Benachrichtigung der Fehlfunktion (Mf) ist, und für jedes Eingangsdatenelement (Dt), Beibehalten nur eines Samples (Sp), das die in dem kausalen Zeitfenster (CW) inbegriffenen Messungen (Ts) enthält;
   - Gewichten (104) jeder Messung (Ts) eines selben Samples (Sp), wobei die Summe der Gewichtungen eines selben Samples (Sp) gleich 1 ist;
   - Filtern (105) der Messungen jedes Samples, um nur Messungen von Interesse gegenüber der Fehlfunktion beizubehalten;
   - Vergleichen (106) der Messungen von Interesse (Im) jedes Samples (Sp) mit Referenzmessungen (Rm) und für jede Messung von Interesse (Im) eines Samples, die über der entsprechenden Referenzmessung (Rm) liegt, Zuweisen eines ersten booleschen Werts (Tr) zu der Messung von Interesse (Im) und für jede Messung von Interesse (Im) eines Samples, die unter der entsprechenden Referenzmessung (Rm) liegt, Zuweisen eines zweiten booleschen Werts (Fls) zu der Messung von Interesse, der verschieden von dem ersten booleschen Wert (Tr) ist, um eine Reihe von booleschen Werten (Bs) zu erhalten;

   - Unterteilen (107) jeder Gruppe in mehrere Untergruppen, wobei jede Untergruppe einer Änderung eines oder mehrerer booleschen Werte der Reihe von booleschen Werten (Bs) entspricht, so dass es für jede Gruppe $2^n$ Untergruppen gibt, wobei n die Anzahl von booleschen Werten ist, und Verteilen jedes Samples einer selben Gruppe in eine Untergruppe, die den booleschen Werten jedes Samples entspricht;
   - Berechnen (108) der Summe der Gewichtungen der Messungen jeder Untergruppe;
   - Verwenden (109) der Summe der Gewichtungen jeder Untergruppe, um eine Eintrittswahrscheinlichkeit der Fehlfunktion für jede Untergruppe zu bestimmen
   - Vornehmen einer Wartungsmaßnahme eines Flugzeugs gemäß der bestimmten Eintrittswahrscheinlichkeit der Fehlfunktion.

2. Verfahren nach Anspruch 1, wobei die Gewichtung (104) jeder Messung (Ts) gemäß $W = 1/N$ berechnet wird, wobei: W die Gewichtung ist und N die Anzahl von Messungen (Ts) in dem Sample (Sp) ist.

3. Verfahren nach Anspruch 1, wobei die Gewichtung (104) jeder Messung (Ts) gemäß
$$Wc = \frac{CW(-t) \times W}{NF}$$
korrigiert wird, wobei Wc die korrigierte Gewichtung ist, CW das kausale Zeitfenster ist und NF ein Standardisierungsfaktor ist.

4. Verfahren nach Anspruch 3, wobei der Standardisierungsfaktor NF berechnet wird gemäß: $NF = \sum CW(-t) \times W.$

5. Verfahren nach einem der Ansprüche 1 bis 4, wobei ein lernendes System (9000) die Summe der Gewichtungen jeder Untergruppe verwendet (109), um die Eintrittswahrscheinlichkeit der Fehlfunktion für jede Untergruppe zu bestimmen.

6. Computerprogrammprodukt, das Programmcodeanweisungen umfasst, um bei der Ausführung der Anweisungen durch einen Prozessor das Verfahren (100) nach einem der Ansprüche 1 bis 5 auszuführen.

7. Nichtflüchtiges Speichermedium, auf dem ein Computerprogramm gespeichert ist, das Programmcodeanweisungen umfasst, um beim Lesen der Anweisungen von dem nichtflüchtigen Speichermedium und Ausführen durch einen Prozessor das Verfahren (100) nach einem der Ansprüche 1 bis 5 auszuführen.

8. Informationssystem (200), umfassend eine elektronische Schaltungsanordnung, die dazu ausgestaltet ist, eine Bestimmung einer Eintrittswahrscheinlichkeit einer Fehlfunktion, die zu einer Leistungseinbuße in einem Flugzeug führt, zu implementieren, wobei die elektronische Schaltungsanordnung mindestens die folgenden Schritte implementiert:

  - Erfassen (101) eines Satzes (DtS) von Eingangsdaten (Dt), die sich jeweils auf ein Eintreten der Fehlfunktion (Mf) in einem Flugzeug beziehen, wobei jedes Eingangsdatenelement (Dt) eine zeitgestempelte Benachrichtigung der Fehlfunktion (Mf) und eine zeitgestempelte Aufstellung von Messungen (Ts) von Sensoren des Flugzeugs umfasst;
  - Gruppieren (102) der Eingangsdaten (Dt) zu Fehlfunktionsgruppen (Mf), die eine selbe Grundursache haben;
  - Begrenzen (103) eines kausalen Zeitfensters (CW) für die Fehlfunktion (Mf), wobei ein oberer Grenzwert des kausalen Zeitfensters (CW) die zeitgestempelte Benachrichtigung der Fehlfunktion (Mf) ist, und für jedes Eingangsdatenelement (Dt), Beibehalten nur eines Samples (Sp), das die in dem kausalen Zeitfenster (CW) inbegriffenen Messungen (Ts) enthält;
  - Gewichten (104) jeder Messung (Ts) eines selben Samples (Sp), wobei die Summe der Gewichtungen eines selben Samples (Sp) gleich 1 ist;
  - Filtern (105) der Messungen jedes Samples, um nur Messungen von Interesse gegenüber der Fehlfunktion beizubehalten;
  - Vergleichen (106) der Messungen von Interesse (Im) jedes Samples (Sp) mit Referenzmessungen (Rm) und, für jede Messung von Interesse (Im) eines Samples, die größer als die entsprechende Referenzmessung (Rm) ist, Zuweisen eines ersten booleschen Werts (Tr) zu der Messung von Interesse (Im), und für jede Messung von Interesse (Im) eines Samples, die kleiner als die entsprechende Referenzmessung (Rm) ist, Zuweisen eines zweiten booleschen Werts (Fls) zu der Messung von Interesse, der verschieden von dem ersten booleschen Wert (Tr) ist, um eine Reihe von booleschen Werten (Bs) zu erhalten;
  - Unterteilen (107) jeder Gruppe in mehrere Untergruppen, wobei jede Untergruppe einer Änderung eines oder mehrerer boolescher Werte der Reihe von booleschen Werten (Bs) entspricht, so dass es für jede Gruppe $2^n$ Untergruppen gibt, wobei n die Anzahl von booleschen Werten ist, und Verteilen jedes Samples einer selben Gruppe in eine Untergruppe, die den booleschen Werten jedes Samples entspricht;
  - Berechnen (108) der Summe der Gewichtungen der Messungen jeder Untergruppe;
  - Verwenden (109) der Summe der Gewichtungen jeder Untergruppe, um eine Eintrittswahrscheinlichkeit der Fehlfunktion für jede Untergruppe zu bestimmen.

**Claims**

1. Method (100) for determining a probability of occurrence of a malfunction (Mf) creating a performance defect in an aircraft with a view to carrying out a maintenance action <u>accordingly</u>, the method being **characterized in that** it is executed by a computing system (200) comprising electronic circuitry that implements the following steps:

  - acquiring (101) a set (DtS) of input data (Dt) each relating to the occurrence of said malfunction (Mf) in an aircraft, each input datum (Dt) comprising a timestamped notification of the malfunction (Mf) and a timestamped record of measurements (Ts) from sensors of the aircraft;
  - grouping (102) the input data (Dt) into groups of malfunctions (Mf) having the same root cause;
  - delimiting (103) a causal time window (CW) for the malfunction (Mf), an upper bound of the causal time window (CW) being the timestamped notification of the malfunction (Mf), and, for each input datum (Dt), retaining only a sample (Sp) containing the measurements (Ts) contained within the causal time window (CW);
  - weighting (104) each measurement (Ts) of the same sample (Sp), the sum of the weights of the same sample (Sp) being equal to 1;
  - filtering (105) the measurements of each sample so as to retain only measurements of interest with respect to the malfunction;
  - comparing (106) the measurements of interest (Im) of each sample (Sp) with reference measurements (Rm), and for each measurement of interest (Im) of a sample that is greater than the corresponding reference measurement (Rm), assigning a first Boolean value (Tr) to said measurement of interest (Im), and for each measurement of interest (Im) of a sample that is less than the corresponding reference measurement (Rm), assigning a second Boolean value (Fls) to said measurement of interest different from the first Boolean value (Tr), so as to obtain a series of Boolean values (Bs);
- splitting (107) each group into a plurality of subgroups, each subgroup corresponding to a variation of one or more Boolean values of the series of Boolean values (Bs), such that, for each group, there are $2^n$ subgroups, where n is the number of Boolean values, and dividing each sample of the same group into a subgroup corresponding to the Boolean values of each sample;
- calculating (108) the sum of the weights of the measurements of each subgroup;
- using (109) the sum of the weights of each subgroup to determine a probability of occurrence of the malfunction for each subgroup.
- carrying out a maintenance action on an aircraft according to the determined probability of occurrence of the malfunction.

2. Method according to Claim 1, wherein the weight (104) of each measurement (Ts) is calculated according to $W = 1/N$, where: W is the weight and N is the number of measurements (Ts) in the sample (Sp).

3. Method according to Claim 1, wherein the weight (104) of each measurement (Ts) is corrected according to $Wc = \frac{CW(-t) \times W}{NF}$, where Wc is the corrected weight, CW is the causal time window and NF is a normalization factor.

4. Method according to Claim 3, wherein the normalization factor NF is calculated according to: $NF = \sum CW(-t) \times W$.

5. Method according to one of Claims 1 to 4, wherein a learning system (9000) uses (109) the sum of the weights of each subgroup to determine a probability of occurrence of the malfunction for each subgroup.

6. Computer program product comprising program code instructions for executing the method (100) according to any one of Claims 1 to 5 when said instructions are executed by a processor.

7. Non-transient storage medium on which there is stored a computer program comprising program code instructions for executing the method (100) according to any one of Claims 1 to 5 when said instructions are read from said non-transient storage medium and executed by a processor.

8. Computing system (200) comprising electronic circuitry configured to determine a probability of occurrence of a malfunction creating a performance defect in an aircraft, the electronic circuitry implementing at least the following steps:

- acquiring (101) a set (DtS) of input data (Dt) each relating to the occurrence of said malfunction (Mf) in an aircraft, each input datum (Dt) comprising a timestamped notification of the malfunction (Mf) and a timestamped record of measurements (Ts) from sensors of the aircraft;
- grouping (102) the input data (Dt) into groups of malfunctions (Mf) having the same root cause;
- delimiting (103) a causal time window (CW) for the malfunction (Mf), an upper bound of the causal time window (CW) being the timestamped notification of the malfunction (Mf), and, for each input datum (Dt), retaining only a sample (Sp) containing the measurements (Ts) contained within the causal time window (CW);
- weighting (104) each measurement (Ts) of the same sample (Sp), the sum of the weights of the same sample (Sp) being equal to 1;
- filtering (105) the measurements of each sample so as to retain only measurements of interest with respect to the malfunction;
- comparing (106) the measurements of interest (Im) of each sample (Sp) with reference measurements (Rm), and for each measurement of interest (Im) of a sample that is greater than the corresponding reference measurement (Rm), assigning a first Boolean value (Tr) to said measurement of interest (Im), and for each measurement of interest (Im) of a sample that is less than the corresponding reference measurement (Rm), assigning a second Boolean value (Fls) to said measurement of interest different from the first Boolean value (Tr), so as to obtain a series of Boolean values (Bs);
- splitting (107) each group into a plurality of subgroups, each subgroup corresponding to a variation of one or more Boolean values of the series of Boolean values (Bs), such that, for each group, there are $2^n$ subgroups, where n is the number of Boolean values, and dividing each sample of the same group into a subgroup corresponding to the Boolean values of each sample;
- calculating (108) the sum of the weights of the measurements of each subgroup;
- using (109) the sum of the weights of each subgroup to determine a probability of occurrence of the malfunction for each subgroup.

Fig. 1

Fig. 2

**RÉFÉRENCES CITÉES DANS LA DESCRIPTION**

**Documents brevets cités dans la description**

- US 10964130 B